# EUROPÄISCHE PATENTSCHRIFT

(11) **EP 1 572 399 B1**
(45) Veröffentlichungstag und Bekanntmachung des Hinweises auf die Patenterteilung: **18.04.2007**
(21) Anmeldenummer: 03756469.7
(22) Anmeldetag: 29.09.2003
(51) Int. Cl.: B22D 11/111, C21C 5/00, C21C 7/00, B22D 11/11

(54) **ABDECKMITTEL FÜR EINE TOPSCHLACKE, VERFAHREN ZU DESSEN HERSTELLUNG UND VERWENDUNG DES ABDECKMITTELS**
COVERING MEANS FOR A TOP SLAG, METHOD FOR THE PRODUCTION THEREOF AND USE OF THE COVERING MEANS
ELEMENT DE RECOUVREMENT POUR LAITIER, PROCEDE POUR LE REALISER ET UTILISATION DE L'ELEMENT DE RECOUVREMENT

(30) Priorität: 18.12.2002 DE 10259335
(43) Veröffentlichungstag der Anmeldung: 14.09.2005
(73) Patentinhaber: Refratechnik Holding GmbH & Co. KG, 85737 Ismaning (DE)
(72) Erfinder: ACKERMANN, Andreas, 80634 München (DE); KOSLOWSKI, Wolfgang, 81739 München (DE)
(74) Vertreter: Solf, Alexander
(86) Internationale Anmeldenummer: PCT/EP2003/010807
(87) Internationale Veröffentlichungsnummer: WO 2004/054742

(56) Entgegenhaltungen:
- DE-A- 4 230 161
- DE-A- 10 124 926
- DE-C- 3 727 619
- DE-C- 3 742 415
- DE-C- 3 823 410
- DE-C- 19 728 368
- K. SCHWERDTFEGER: "Metallurgie des Stranggiessens" , VERLAG STAHLEISEN , DÜSSELDORF XP002264211 ISBN: 3-514-00350-5 Seite 236, Absatz 1; Tabelle 3.2.1
- PATENT ABSTRACTS OF JAPAN vol. 013, no. 565 (M-907), 14. Dezember 1989 (1989-12-14) -& JP 01 237049 A (SHIN NIPPON KAGAKU KOGYO CO LTD;OTHERS: 01), 21. September 1989 (1989-09-21)
- PATENT ABSTRACTS OF JAPAN vol. 006, no. 131 (C-114), 17. Juli 1982 (1982-07-17) -& JP 57 057824 A (SAKAI KAGAKU KOGYO KK), 7. April 1982 (1982-04-07)
- PATENT ABSTRACTS OF JAPAN vol. 1998, no. 14, 31. Dezember 1998 (1998-12-31) -& JP 10 258343 A (NIPPON STEEL METAL PROD CO LTD), 29. September 1998 (1998-09-29)

## Beschreibung

Die Erfindung betrifft ein Abdeckmittel bzw. ein Abdeckmaterial zum Abdecken der freien Oberfläche eines Stahlschmelzbades in einem offenen metallurgischen Gefäß, insbesondere bei der Stahlerzeugung im Bereich der Roheisen- und Sekundärmetallurgie und im Strangguss, zur Bildung einer Topschlacke. Die Erfindung betrifft zudem die Verwendung des Abdeckmittels.

Das Schmelzbad in offenen metallurgischen Gefäßen der Stahlindustrie, wie z. B. in Stranggießverteilern (Tundish), wird üblicherweise mit einem Abdeckmittel bzw. einem Abdeckmaterial abgedeckt, das schmilzt und die sogenannte Topschlacke bildet. Die Topschlacke gewährleistet eine flüssige Schutzschicht auf der Metallbadoberfläche, die metallurgische Arbeit für z. B. den oxydischen Reinheitsgrad leisten soll, indem sie z. B. eine Gasaufnahme aus der Atmosphäre verhindert und aus der Schmelze nichtmetallische Einschlüsse absorbiert.

Topschlackenmittel zur Abdeckung eines Schmelzbades haben in der Regel einen Schmelzpunkt, der typischerweise 150 °C unter der Liquidustemperatur der Schmelze , liegt, so dass sie nach dem Aufbringen nach kurzer Zeit aufschmelzen.

Die Zusammensetzung der Topschlacke richtet sich nach den Anforderungen des metallischen Schmelzbades. Für die Stahlerzeugung werden meist basische Abdeckmittel auf Calciumaluminatbasis , z. B. C₁₂A₇ (12 CaO · 7 Al₂O₃) verwendet. Dabei kann es sich z. B. um Gemenge oder Schmelzprodukte aus einem Al₂O₃-Träger wie Bauxit oder Tonerde und einem CaO-Träger wie Kalkstein, Branntkalk oder Dolomit handeln. Es kommen aber auch z. B. Stranggießpulver als Gemenge aus SiO₂, CaO, Al₂O₂, Fluor oder Sodakomponenten oder vanadinschlackenmittel zum Einsatz.

Die flüssige Schlackenschicht führt große Wärmemengen aus dem Schmelzbad nach außen ab und verursacht somit hohe Wärmeverluste. Um dies zu verhindern, wird auf die Schlacke ein Wärmedämmmittel aufgeschichtet. Die Wärmedämmmittel sollen bei den Schmelzbad- und Schlackenschmelztemperaturen nicht schmelzen und derart inert sein bzw. nicht reagieren,- so dass sie an der metallurgischen Arbeit nicht teilnehmen. Beispielweise wird als wärmedämmendes Mittel biogene Kieselsäure in Form von Reisschalenasche verwendet. Darüber hinaus finden granulierte sprühgetrocknete Granulate Verwendung, die in Form von Minihohlkugeln vorliegen.

In der Praxis wird die Metallschmelze meist zuerst mit dem Topschlackenmittel abgedeckt; danach wird das Wärmedämmmittel auf die schmelzflüssige Topschlacke gegeben. Die Kombination aus Topschlacke plus Wärmedämmmittel wird auch "Sandwich-Abdeckung" genannt .

Nachteilig an diesem bekannten Sandwich-Abdeckverfahren mit Wärmedämmung ist zum einen, dass zwei unterschiedliche Mittel verwendet werden müssen: Man muss zwei Produkte bevorraten und beachten, dass sie vor Ort nicht verwechselt werden. Zum anderen finden dennoch Reaktionen zwischen dem trockenen festeren Wärmedämmmittel und der flüssigen Topschlacke statt, die die metallurgische Arbeit der Topschlacke beeinträchtigen. Beispielsweise kann von der Topschlacke bis zur Sättigungsgrenze SiO₂ aus der Reisschalenasche aufgenommen werden mit der Folge, dass von der Topschlacke Sauerstoff an die Metallschmelze abgegeben wird, was eigentlich durch die Topschlacke verhindert werden soll.

Schmelzen in metallurgischen Gießpfannen werden häufig ebenfalls mit wärmedämmenden Mitteln abgedeckt. Die Schmelzbadoberfläche einer Gießpfanne wird z. B. am Ende der metallurgischen Arbeit mit dem wärmedämmenden Material abgedeckt, wodurch die thermischen Verluste reduziert werden.

In einigen Fällen wird auch schon vor Beendigung der metallurgischen Arbeit eine thermische Isolation aufgebracht, z. B. wenn längere Transport- oder Standzeiten vom Abstich zur nächsten Behandlungsstufe vorgesehen sind. Dabei ist gegebenenfalls die thermisch isolierende Abdeckung vor der nächsten Behandlungsstufe durch Abschlacken wieder zu entfernen, weil sie die folgende metallurgische Arbeit einer danach aufgebrachten Topschlacke behindern würde. Diese Maßnahme erfordert zusätzlichen Aufwand, verzögert die metallurgische Arbeit erheblich und führt zu nicht unbeträchtlichen Materialverlusten bezüglich des Wärmedämmmittels.

In K. Schwerdtfeger - Metallurgie des Stranggiessens, Stahleisen Verlag, Düsseldorf, 1992, S. 233/6 werden Stranggießmittel offenbart, die hauptsächlich als Pulver, gelegentlich aber auch in Granulatform verwendet werden. Stranggießpulver dürfen keine Schlacken bilden.

DE-C-3727619 offenbart eine Abdeckmasse aus Kügelchen. Die Kügelchen weisen einen Kern aus Magnesitpulver (Magnesiumcarbonatpulver) auf. Sie sind mit einem Schlackenüberzug versehen, der im Wesentlichen aus Kalk- und Tonerde besteht.

Aufgabe der Erfindung ist, eine gute metallurgische Arbeit eines Abdeckmittels für ein Stahlschmelzbad und eine einfachere Wärmedämmung zu gewährleisten.

Diese Aufgabe wird durch die Ansprüche 1, 8, 11 und 20, 21 gelöst. Vorteilhafte Ausführungsformen der Erfindung werden in den Unteransprüchen gekennzeichnet.

Die Erfindung betrifft somit ein körniges Abdeckmittel, dessen Schmelze eine für die metallurgische Arbeit erforderliche, chemische und mineralogische Zusammensetzung aufweist und das auf einem metallischen Schmelzbad sowohl die Schlackenschmelze als auch darüber durch eine entsprechende Porosierung der Körner eine Wärmedämmschicht ausbildet.

Mithin erfüllt das erfindungsgemäße Topschlackenmaterial synergistisch auch die Funktion eines Wärmedämmmittels, indem die Körner aufgrund einer Porosierung eine entsprechende wärmedämmende Porosität aufweisen.

Wird das erfindungsgemäß porosierte Schlackenmaterial auf das metallische Schmelzbad aufgebracht, schmilzt ein vorbestimmter Teil des Materials der Beschichtung, der mit der Schmelzbadoberfläche direkt in Kontakt steht und bildet eine schmelzflüssige Schlackenschicht. Darüber befindet sich porosiertes, trockenes, festes Schlackenmaterial in loser Schüttung, wobei in einem Übergangsbereich sowohl Schlackenschmelze als auch porosiertes Schlackenmaterial vorhanden ist. Die Wärmedämmung ergibt sich im wesentlichen aus der Komporosität und den Zwischenräumen zwischen den Körnern des Topschlackenmaterials (Zwischenkornvolumen) der Schüttung.

Die Menge des aufzubringenden Topschlackenmaterials richtet sich nach der erforderlichen metallurgischen Arbeit und nach der gewünschten Wärmedämmung.

Eine besondere weitere synergistische Leistung des erfindungsgemäßen Topschlackenmaterials wird dadurch erbracht, dass durch die metallurgische Arbeit verbrauchte Elemente bzw. Stoffe der Topschlackenschmelze automatisch aus dem darüber liegenden Übergangsbereichmaterial und/oder dem Material der wärmedämmenden Schicht nachgeliefert werden können. Verarmt die Schlackenschmelze an einem bestimmten Bestandteil, ergibt sich ein Konzentrationsgefälle, das durch Nachlieferung des Bestandteils aus dem nicht geschmolzenen Material kompensiert wird. Auf diese Weise stellen sich optimale Verhältnisse für die metallurgische Arbeit langfristig selbsttätig ein.

Die Erfindung geht somit einen völlig neuen Weg, die wärmedämmung zu gewährleisten, der zudem überraschend viele Vorteile erbringt. Beispielsweise ist es kein Problem mehr, gefüllte Gießpfannen, die längere Zwischenzeiten verbringen müssen, mit dem erfindungsgemäßen Topschlackenmaterial lediglich zunächst wärmedämmend abzudecken, ohne dass wesentliche Mengen flüssiger Schlacke erzeugt werden. Anschließend erst wird für die metallurgische Arbeit das wärmedämmende Material zur Topschlacke aufgeschmolzen. Das Entfernen von Wärmedämmmittel vor der metallurgischen Arbeit, das bisher erforderlich war, entfällt damit.

Das erfindungsgemäße porosierte Topschlackenmaterial kann z. B. hergestellt werden, indem mindestens ein Ausgangsstoff verwendet wird, der bei Entwässerung oder Calcinationsreaktionen gasförmige Stoffe freisetzt und dabei Poren erzeugt. Vorzugsweise werden gemahlene, z. B. auf < 90 µm gemahlene Topschlackenrohstoffe mit einem Bindemittel versetzt, das bei niedrigeren Temperaturen ausbrennt und ermöglicht, aus dem Gemenge in' einer Pelletier- oder Granuliereinrichtung, z. B. auf einem Granulierteller oder in einer Granuliertrommel, Körper bestimmter Korngröße zu erzeugen. Die Körper bzw. Pellets oder Granalien werden derart wärmebehandelt, dass das Bindemittel ausbrennt, die Rohstoffe entwässern und/oder calcinieren und eine keramische Bindung und/oder Sinterbindung bewirkt wird. Nach dem Abkühlen erhält man feste Pellets oder Granalien mit Poren, die durch Entwässerung und/oder Ausbrennen und/oder Calcination eingebracht sind.

Als Bindemittel werden vorzugsweise Wasser, Wasserglas, Kunstharze, Sulfitablauge, Phosphatverbindungen und/oder Branntkalk verwendet.

Nach einer besonderen Ausführungsform der Erfindung werden zur Porosierung den Bindemittel-Rohstoffgemengen organische Ausbrennstoffe zugegeben, die Porosität durch Ausbrennen erzeugen. Diese Porosierungsmittel wie Papierfasern, Sägespäne, Sägemehl, Holzspäne, Styroporgranulate oder dergleichen werden insbesondere dann verwendet, wenn die Ausgangsrohstoffe keine oder nur wenig Poren beim Brennen erzeugen.

Selbstverständlich erzeugen auch die ausbrennenden Bindemittel zusätzliche Poren, so dass der Porenanteil durch die Bindemittelzugabe, die Auswahl entwässerbarer und/oder calcinierbarer Ausgangsstoffe und/oder die Ausbrennstoffe gesteuert werden kann.

Vorzugsweise werden Pellets oder Granalien hergestellt, die Korngrößen zwischen 1 und 50 mm, insbesondere zwischen 3 und 20 mm aufweisen, wobei vorteilhaft ist, bezüglich der Korngrößenverteilung möglichst enge Kornfraktionen zu verwenden, so dass in der Kornpackung auf einem Schmelzbad oder auf der Schlackenschmelze möglichst viel Luft in den Kornzwickeln vorhanden ist, wodurch die Wärmedämmung weitergehend erhöht wird.

Zweckmäßigerweise weisen die Pellets oder Granalien im körnigen Gut eine Porosität von 5 bis 70 Vol.-%, insbesondere von 20 bis 60 Vol.-% auf.

Bevorzugte Schüttdichten des erfindungsgemäßen Topschlackenmaterials liegen zwischen 0,2 und 1,6 kg/dm³, insbesondere zwischen 0,3 und 1,3 kg/dm³.

Erfiridungsgemäß geeignet sind porosierte basische Topschlackenmittel für die Stahlerzeugung auf der Basis von Calciumaluminaten im Verhältnis von:
CaO / Al₂O₃ von 0,25 bis 1,5, insbesondere von 1,0 bis 1,5

Bis 15 M.-% an Nebenphasen können enthalten sein. Diese sind z. B. MgO und/oder MgOSiO₂ und/oder TiO₂ und/oder Fe₂O₃ und/oder Alkalien.

Nach einer weiteren Ausführungsform der Erfindung wird erfindungsgemäßes Topschlackenmaterial hergestellt, indem dem Rohstoffgemenge ein Blähmittel und Wasser oder ein Schäummittel und Wasser zugesetzt wird, so dass die Mischung bläht oder schäumt und dadurch Poren erzeugt werden. Anschließend kann die geblähte oder geschäumte Mischung gebrannt und nach der Abkühlung zur gewünschten Körnung gebrochen werden.

Anstelle eines Schäummittels kann dem trockenen Gemenge oder einer wässrigen Mischung auch ein vorgeschäumter Schaum untergemengt werden.

Auch diese Herstellungsverfahren ermöglichen auf einfache Weise eine vorbestimmbare bzw. gesteuerte Porosierung, wobei auch eine Kombination mit der Porenerzeugung über Ausbrennmittel und Calcination gewählt werden kann.

Anhand des folgenden Beispiels wird die Herstellung eines erfindungsgemäßen Topschlackenprodukts näher erläutert. Aus Rohbauxit und Kalksteinmehl jeweils einer Feinheit < 90 µm und Wasser als Bindemittel wurde ein formbares Gemenge hergestellt, dessen CaO/Al₂O₃-Verhältnis 1,14 ergab. Die Bindemittelmenge wurde derart eingestellt, dass auf einem Granulierteller Granalien in einer Kornfraktion zwischen 5 und 20 mm erzeugt werden konnten.

Die Granalien wurden bis 1250 °C derart aufgeheizt, dass das Bindemittel ausbrannte, die Bauxit- und Kalksteinkomponente calcinierte und eine keramische Bindung der calcinierten Körner erfolgte.

Nach der Abkühlung lag ein porosiertes, körniges, rieselfähiges Topschlackenmaterial aus Calciumaluminat in etwa der Ausgangszusammensetzung bezüglich Al₂O₃ und CaO und der Ausgangskornfraktion vor, das abgepackt und versandt werden konnte.

Aufgebracht auf ein Stahlschmelzbad in einem Stranggießverteiler (Tundish) wurde übereinander eine schmelzflüssige Schlackenschicht, ein Übergangsbereich und eine wärmedämmende Schüttschicht erzeugt. Die Wärmedämmung war vergleichbar mit herkömmlichen Wärmedämmmitteln. Die metallurgische Arbeit der Schlacke war ebenfalls ausgezeichnet und vor allem dauerhafter als bei der herkömmlichen Schlacke gleicher Sandwichabdeckung. Dies ergab sich offensichtlich durch die Nachlieferung an Stoffen aus dem wärmedämmenden Granulat über der Schlacke, die bei der metallurgischen Arbeit in der Schlacke verbraucht waren, als auch durch Vermeidung von chemischen Reaktionen zwischen der Topschlacke und dem Wärmedämmmittel.

Es liegt im Rahmen der Erfindung, nicht porosiertes an sich bekanntes Topschlackenmaterial mit erfindungsgemäßem porosierten Topschlackenmaterial möglichst gleicher oder ähnlicher, d. h. metallurgisch gleich wirkender Zusammensetzung zu kombinieren, in dem zunächst das Schmelzbad mit dem bekannten, nicht porosierten Topschlackenmaterial abgedeckt wird, das sehr schnell schmilzt. Anschließend wird erfindungsgemäßes Topschlackenmaterial auf die Schlackenschmelze aufgebracht, das im wesentlichen lediglich wärmedämmend wirkt und verbrauchte Stoffe an die Schlackenschmelze nachliefern kann. Dabei kann - wie bei der oben beschriebenen erfindungsgemäßen "Monoabdeckung" - die Wärmedämmung über die Auswahl der Kornfraktion und/oder der Porosität im Gut gezielt eingestellt werden. Dies ist beispielsweise möglich durch die Kombination verschiedener Kornfraktionen und/oder verschiedener Porositäten im Gut.

## Patentansprüche

1. Abdeckmittel zur Bildung einer Topschlacke auf einem Stahlschmelzbad, das auf dem Schmelzbad schmilzt und metallurgische Arbeit leistet,
**dadurch gekennzeichnet, dass**
a) es aus porosiertem Granulat besteht, deren Körner eine Porosität von 5 bis 70 Vol.-% aufweisen,
b) das Granulat aus Calciumaluminaten besteht mit folgender chemischer Analyse:
CaO/Al₂O₃ von 0,25 bis 1,5, vorzugsweise von 1,0 bis 1,5,
wobei wahlweise bis zu 15 M.-% Nebenphasen, insbesondere MgO und/oder MgOsiO₂ und/oder TiO₂ Und/oder Fe₂O₃ und/oder Alkalien enthalten sein können,
so dass
c1) dessen Schmelze eine die metallurgische Arbeit erforderliche chemische und mineralogische Zusammensetzung aufweist,
c2) es auf dem Stahlbad sowohl die Schlackenschmelze als auch darüber durch eine entsprechende Porosierung der Körner eine Wärmedämmschicht ausbildet.

2. Abdeckmittel nach Anspruch 1,
**dadurch gekennzeichnet, dass**
es in einer Kornfraktion zwischen 1 und 50 mm, insbesondere zwischen 2 und 20 mm vorliegt.

3. Abdeckmittel nach Anspruch 1 und/oder 2,
**dadurch gekennzeichnet, dass**
es ein Produkt, aus geformten Granalien und/oder ein pelletiertes Produkt ist.

4. Abdeckmittel nach einem oder mehreren der Ansprüche 1 bis 3,
**dadurch gekennzeichnet, dass**
es ein granuliertes Schaumprodukt und/oder ein geblähtes, granuliertes Produkt ist.

5. Abdeckmittel nach einem oder mehreren der Ansprüche 1 bis 4,
**dadurch gekennzeichnet, dass**
die Körner eine durch Entwässerung und/oder Calcination erzeugte Porosität aufweisen.

6. Abdeckmittel nach einem oder mehreren der Ansprüche 1 bis 5,
**dadurch gekennzeichnet, dass**
die Körner eine durch organische Ausbrennstoffe erzeugte Porosität aufweisen.

7. Abdeckmittel nach einem oder mehreren der Ansprüche 1 bis 6,
**dadurch gekennzeichnet, dass**
die Körner eine Porosität von 20 bis 60 Vol.-% aufweisen.

8. Verfahren zur Herstellung eines Abdeckmittels nach einem oder mehreren der Ansprüche 1 bis 7, wobei bei hohen Temperaturen miteinander reagierende, feinteilige mineralische für eine Topschlacke taugliche Rohstoffe, die im Gemenge den folgenden Chemismus gewährleisten:
CaO/Al₂O₃ von 0,25 bis 1, 5 , insbesondere von 1,0 bis 1 , 5
gemengt und bis zur Reaktion erhitzt werden, wobei
a) mindestens ein Rohstoff verwendet wird, der entwässert und/oder calciniert wird und dabei Wasserdampf und/oder gasförmige Produkte freisetzt,
b) das Gemenge mit einem ausbrennbaren Bindemittel zu einer formbaren Masse angemacht wird,
c) die formbare Masse zu körnigem Gut geformt. insbesondere zu Granalien granuliert oder zu Pellets pelletiert wird,
d) das körnige Gut derart aufgeheizt wird, dass das Bindemittel ausbrennt, durch Dehydratation und/oder Calcination Poren erzeugt werden, und anschließend eine keramische Bindung und/oder eine Sinterbindung der Rohstoffe erzeugt wird.

9. Verfahren nach Anspruch 8,
**dadurch gekennzeichnet, dass**
gemahlene Rohstoffe mit Korngrößen < 90 µm verwendet werden.

10. Verfahren nach Anspruch 8 und/oder 9,
**dadurch gekennzeichnet, dass**
als Bindemittel Wasser, Wasserglas, Kunstharze, Sulfitablauge, Phosphatverbindungen und/oder Branntkalk verwendet werden.

11. Verfahren zur Herstellung eines Abdeckmittels nach einem oder mehreren der Ansprüche 1 bis 7, wobei bei hohen Temperaturen miteinander reagierende, feinteilige mineralische, für eine Topschlacke taugliche Rohstoffe, die im Gemenge den folgenden Chemismus gewährleisten:
CaO/Al₂O₃ von 0,25 bis 1,5, insbesondere von 1,0 bis 1,5
gemengt und bis zur Reaktion erhitzt werden, wobei
a) die Rohstoffe mit Wasser und einem Schäummittel und/oder einem Blähmittel und/oder einem Schaum gemengt werden, so dass Poren in die wässrige Masse eingebracht werden,
b) die Masse gebrannt wird, bis eine keramische Bindung und/oder eine Sinterbindung erzeugt wird.

12. Verfahren nach Anspruch 11,
**dadurch gekennzeichnet, dass**
das gebrannte Produkt zerkleinert und klassiert wird..

13. Verfahren nach einem oder mehreren der Ansprüche 8 bis 12,
**dadurch gekennzeichnet, dass**
zur Porosierung organische Ausbrennstoffe dem Gemenge zugegeben werden.

14. Verfahren nach Anspruch 13,
**dadurch gekennzeichnet, dass**
Papierfasern, Sägemehl, Sägespäne, Holzspäne und/oder Styroporgranulat zugesetzt werden.

15. Verfahren nach einem oder mehreren der Ansprüche 8 bis 14,
**dadurch gekennzeichnet, dass**
Rohstoffe einer Feinheit < 90 µm verwendet werden.

16. Verfahren nach einem oder mehreren der Ansprüche 8 bis 15,
**dadurch gekennzeichnet, dass**
Rohstoffe verwendet werden, die bis zu 15 M.-% Nebenphasen aufweisen.

17. Verfahren nach einem oder mehreren der Ansprüche 8 bis 16,
**dadurch gekennzeichnet, dass**
die Nebenphasen MgO und/oder MgOSiO₂ und/oder TiO₂ und/oder Fe₂O₃ und/oder Alkalien sind.

18. Verfahren nach einem oder mehreren der Ansprüche 8 bis 17.,
**dadurch gekennzeichnet, dass**
bei Temperaturen bis 1250 °C gebrannt wird.

19. Verfahren nach einem oder mehreren der Ansprüche 8 bis 18,
**dadurch gekennzeichnet, dass**
entwässernde und/oder calcinierende Rohstoffe verwendet werden.

20. Verwendung eines porosierten, eine Topschlackensclamelze und eine Wärmedämmschicht auf einem metallurgischen Stahlschmelzbad, bildenden Topschlackenmittels nach einem oder mehreren der Ansprüche 1 bis 7, insbesondere hergestellt nach einem oder mehreren der Ansprüche 8 bis 19 als Monobeschichtung auf einem Stahlschmelzbad.

21. Verwendung eines porosierten, eine Wärmedämmschicht auf einem metallurgischen Schmelzbad bildenden Topschlackenmittels nach einem oder mehreren der Ansprüche 1 bis 7, insbesondere hergestellt nach einem oder mehreren der Ansprüche 8 bis 20, als Wärmedämmmittel auf einem Stahlschmelzbad oder einer Topschlackenschmelze, insbesondere in der Stahlindustrie.

## Claims

1. A covering agent for forming a top slag on a steel melting bath, which melts on the melting bath and performs metallurgical work,
**characterised in that**
a) it consists of granular material which has been made porous, the grains of which have a porosity of 5 to 70 vol. %,
b) the granular material consists of calcium aluminates with the following chemical analysis:
CaO/Al₂O₃ of 0.25 to 1.5, preferably of 1.0 to 1.5,
wherein up to 15 mass % of secondary phases, particularly MgO and/or MgOSiO₂ and/or TiO₂ and/or Fe₂O₃ and/or alkalis, may selectively be included,
so that
c1) its melt has a chemical and mineralogical composition required [for] the metallurgical work,
c2) it forms both the slag melt and also thereover, as a result of the grains being made suitably porous, a thermal insulation layer on the steel bath.

2. A covering agent according to Claim 1,
**characterised in that** it is available in a grain-size fraction between 1 and 50 mm, particularly between 2 and 20 mm.

3. A covering agent according to Claim 1 and/or 2,
**characterised in that** it is a product made of shaped granules and/or is a pelletised product.

4. A covering agent according to one or more of Claims 1 to 3,
**characterised in that** it is a granulated foam product and/or an expanded, granulated product.

5. A covering agent according to one or more of Claims 1 to 4,
**characterised in that** the grains have a porosity produced by means of dehydration and/or calcination.

6. A covering agent according to one or more of Claims 1 to 5,
**characterised in that** the grains have a porosity produced by means of organic burning-out materials.

7. A covering agent according to one or more of Claims 1 to 6,
**characterised in that** the grains have a porosity of 20 to 60 vol. %.

8. A method for producing a covering agent according to one or more of Claims 1 to 7, wherein fine-particle mineral raw materials suitable for a top slag which react with one another at high temperatures and which ensure in the mixture the following chemism:
CaO/Al₂O₃ of 0.25 to 1.5, particularly of 1.0 to 1.5
are mixed and heated until they react,
wherein
a) at least one raw material is used which is dehydrated and/or calcined and in the process releases water vapour and/or gaseous products,
b) the mixture is mixed with a binder capable of burning out, to form a shapeable material,
c) the shapeable material is shaped into granular product, particularly granulated into granules or pelletised into pellets,
d) the granular product is heated in such a way that the binder burns out, pores are produced by means of dehydration and/or calcination, and then a ceramic bond and/or a sintered bond of the raw materials is produced.

9. A method according to Claim 8,
**characterised in that** ground raw materials with grain sizes < 90 µm are used.

10. A method according to Claim 8 and/or 9,
**characterised in that** water, water glass, synthetic resins, spent sulphite liquor, phosphate compounds and/or burnt lime are used as binders.

11. A method for producing a covering agent according to one or more of Claims 1 to 7, wherein fine-particle mineral raw materials suitable for a top slag which react with one another at high temperatures and which ensure in the mixture the following chemism:
CaO/Al₂O₃ of 0.25 to 1.5, particularly of 1.0 to 1.5
are mixed and heated until they react,
wherein
a) the raw materials are mixed with water and a foaming agent and/or an expanding agent and/or a foam, so that pores are introduced into the aqueous material,
b) the material is burned until a ceramic bond and/or a sintered bond is produced.

12. A method according to Claim 11,
**characterised in that** the burned product is comminuted and graded.

13. A method according to one or more of Claims 8 to 12,
**characterised in that** organic burning-out materials are added to the mixture to make it porous.

14. A method according to Claim 13,
**characterised in that** paper fibres, sawdust, sawmill waste, wood chips and/or polystyrene granular material are admixed.

15. A method according to one or more of Claims 8 to 14,
**characterised in that** raw materials of a grain size < 90 µm are used.

16. A method according to one or more of Claims 8 to 15,
**characterised in that** raw materials are used which have up to 15 mass % of secondary phases.

17. A method according to one or more of Claims 8 to 16,
**characterised in that** the secondary phases are MgO and/or MgOSiO₂ and/or TiO₂ and/or Fe₂O₃ and/or alkalis.

18. A method according to one or more of Claims 8 to 17,
**characterised in that** burning takes place at temperatures up to 1250°C.

19. A method according to one or more of Claims 8 to 18,
**characterised in that** dehydrating and/or calcining raw materials are used.

20. A use of a top slag agent which has been made porous and forms a top slag melt and a thermal insulation layer on a metallurgical steel melting bath, according to one or more of Claims 1 to 7, particularly produced according to one or more of Claims 8 to 19, as a mono-coating on a steel melting bath.

21. A use of a top slag agent which has been made porous and forms a thermal insulation layer on a metallurgical melting bath, according to one or more of Claims 1 to 7, particularly produced according to one or more of Claims 8 to 20, as a thermal insulation agent on a steel melting bath or a top slag melt, particularly in the steel industry.

## Revendications

1. Elément de recouvrement pour former un laitier sur un bain de fusion d'acier, lequel fond sur le bain de fusion et accomplit un travail métallurgique,
**caractérisé en ce que**
a) il se compose de granulat rendu poreux, dont les grains présentent une porosité de 5 à 70 pour cent en volume,
b) le granulat se compose d'aluminates de calcium dont la composition chimique est la suivante : CaO/Al₂O₃ de 0,25 à 1,5, de préférence de 1,0 à 1,5, et pouvant contenir optionnellement jusqu'à 15 % en poids de phases secondaires, en particulier MgO et/ou MgOSiO₂ et/ou TiO₂ et/ou Fe₂O₃ et/ou des alcalis,
de sorte que
c1) la masse fondue de celui-ci comporte une composition chimique et minéralogique nécessaire pour le travail métallurgique,
c2) il forme sur le bain d'acier non seulement la masse fondue de laitier mais également au-dessus de cela une couche calorifuge du fait d'une formation correspondante de pores dans les grains.

2. Elément de recouvrement selon la revendication 1,
**caractérisé en ce qu'**il est compris dans une fraction granulométrique comprise entre 1 et 50 mm, en particulier entre 2 et 20 mm.

3. Elément de recouvrement selon la revendication 1 et/ou 2,
**caractérisé en ce qu'**il est un produit constitué de grenailles formées et/ou un produit transformé en boulettes.

4. Elément de recouvrement selon l'une ou plusieurs des revendications 1 à 3,
**caractérisé en ce qu'**il est un produit alvéolaire granulé et/ou un produit granulé gonflé.

5. Elément de recouvrement selon l'une ou plusieurs des revendications 1 à 4,
**caractérisé en ce que** les grains présentent une porosité générée par déshydratation et/ou calcination.

6. Elément de recouvrement selon l'une ou plusieurs des revendications 1 à 5,
**caractérisé en ce que** les grains présentent une porosité générée par des matières organiques de combustion.

7. Elément de recouvrement selon l'une ou plusieurs des revendications 1 à 6,
**caractérisé en ce que** les grains présentent une porosité de 20 à 60 pour cent volumétrique.

8. Procédé pour réaliser un élément de recouvrement selon l'une ou plusieurs des revendications 1 à 7, selon lequel des matières premières minérales à fines particules, appropriées pour un laitier sont mélangées et chauffées jusqu'à réaction, ces matières premières réagissant les unes avec les autres pour donner un mélange présentant la composition suivante :
CaO/Al₂O₃ de 0,25 à 1,5, en particulier de 1,0 à 1,5, étant précisé que
a) on utilise au moins une matière première déshydratée et/ou calcinée qui libère de la vapeur d'eau et/ou des produits gazeux,
b) le mélange est gâché avec un liant combustible afin de former une pâte façonnable,
c) la pâte façonnable est formée en un matériau granuleux, en particulier en grenailles ou est transformée en boulettes,
d) le matériau granuleux est échauffé à tel point que le liant brûle entièrement, que des pores sont générés par déshydratation et/ou calcination et qu'ensuite une liaison céramique et/ou liaison par frittage des matières premières est générée.

9. Procédé selon la revendication 8,
**caractérisé en ce que** les matières premières broyées sont utilisées avec des grosseurs de grain < 90 µm.

10. Procédé selon la revendication 8 et/ou 9,
**caractérisé en ce que** l'on utilise comme liant de l'eau, du verre soluble, des résines synthétiques, de la lessive de sulfite résiduelle, des composés de phosphate et/ou de la chaux vive.

11. Procédé pour réaliser un élément de recouvrement selon l'une ou plusieurs des revendications 1 à 7, selon lequel on mélange et on chauffe à des températures élevées jusqu'à réaction des matières premières minérales à fines particules, appropriées pour un laitier, réagissant les unes avec les autres, pour donner un mélange présentant la composition suivante :
CaO/Al₂O₃ de 0,25 à 1,5, en particulier de 1,0 à 1,5, étant précisé que
a) les matières premières sont mélangées avec de l'eau et un agent moussant et/ou un agent gonflant et/ou une mousse, de sorte que les pores sont introduits dans la masse aqueuse,
b) la masse est cuite jusqu'à ce qu'une liaison céramique et/ou une liaison par frittage soit générée.

12. Procédé selon la revendication 11, **caractérisé en ce que** le produit cuit est broyé et classé.

13. Procédé selon l'une ou plusieurs des revendications 8 à 12, **caractérisé en ce qu'**on ajoute des matières organiques de combustion au mélange pour la formation de pores.

14. Procédé selon la revendication 13,
**caractérisé en ce qu'**on ajoute des fibres de papier, du bran de scie, de la sciure, des copeaux de bois et/ou du granulat de polystyrène.

15. Procédé selon l'une ou plusieurs des revendications 8 à 14,
**caractérisé en ce qu'**on utilise des matières premières d'une finesse < 90 µm.

16. Procédé selon l'une ou plusieurs des revendications 8 à 15, **caractérisé en ce qu'**on utilise des matières premières comportant jusqu'à 15 % en poids de phases secondaires.

17. Procédé selon l'une ou plusieurs des revendications 8 à 16, **caractérisé en ce que** les phases secondaires sont MgO et/ou MgOSiO₂ et/ou TiO₂ et/ou Fe₂O₃ et/ou des alcalis.

18. Procédé selon l'une ou plusieurs des revendications 8 à 17, **caractérisé en ce que** la combustion se produit à des températures allant jusqu'à 1250°C.

19. Procédé selon l'une ou plusieurs des revendications 8 à 18, **caractérisé en ce qu'** on utilise des matières premières de déshydratation ou de calcination.

20. Utilisation d'un moyen de laitier rendu poreux, formant une masse fondue de laitier et une couche calorifuge sur un bain de fusion d'acier métallurgique selon l'une ou plusieurs des revendications 1 à 7, notamment réalisé selon l'une ou plusieurs des revendications 8 à 19 comme revêtement unique sur un bain de fusion d'acier.

21. Utilisation d'un moyen de laitier rendu poreux, formant une couche calorifuge sur un bain de fusion métallurgique selon l'une ou plusieurs des revendications 1 à 7, notamment réalisé selon l'une ou plusieurs des revendications 8 à 20, comme moyen calorifuge sur un bain de fusion d'acier ou une masse fondue de laitier, en particulier dans l'industrie de l'acier.
